# EUROPÄISCHE PATENTSCHRIFT

(11) **EP 0 289 087 B1**
(45) Veröffentlichungstag und Bekanntmachung des Hinweises auf die Patenterteilung: **29.06.1994**
(21) Anmeldenummer: 88200796.6
(22) Anmeldetag: 26.04.1988
(51) Int. Cl.: H04L 12/54, H04Q 3/00

(54) **Paketvermittlungssystem**
Packet switching system
Système de commutation par paquets

(30) Priorität: 30.04.1987 DE 3714385
(43) Veröffentlichungstag der Anmeldung: 02.11.1988
(73) Patentinhaber: Philips Patentverwaltung GmbH, 22335 Hamburg (DE); Philips Electronics N.V., 5621 BA Eindhoven (NL)
(72) Erfinder: Jasmer, Wolfgang, Ing.grad., D-2000 Hamburg 61 (DE); Krüger, Johann, Dipl.-Ing., D-2085 Quickborn (DE); Killat, U., Dr., D-2000 Hamburg 56 (DE)
(74) Vertreter: Peuckert, Hermann, Dipl.-Ing.

(56) Entgegenhaltungen:
- EP-A- 0 245 996
- EP-A- 0 256 701
- INTERNATIONAL SWITCHING SYMPOSIUM, Phoenix, Arizona, 15. - 20. März 1987, Seiten 373-379, IEEE, New York, US; P. GERKE et al.: "Fast packet switching - A principle for future system generations ?"
- INTERNATIONAL SWITCHING SYMPOSIUM, Phoenix, Arizona, 15. - 20. März 1987, Seiten 801-808, IEEE, New York, US; Y.S. YEH et al.: "The knockout switch: a simple, modular architecture for high-performance packet switching"
- INTERNATIONAL SWITCHING SYMPOSIUM, Florence, 7. - 11. Mai 1984, Session 32 C, Papier 2, Seiten 1-7; A. THOMAS et al.: "A synchronous time-division techniques; An experimental packet network integrating videocommunication"

## Beschreibung

Die Erfindung bezieht sich auf ein nach dem Prinzip der asynchronen Zeitvielfachtechnik arbeitendes und Paketisierer und Paketvermittlungseinrichtungen enthaltenes Paketvermittlungssystem, welches
- zur Durchschaltung von auf Zubringerleitungen zugeführten Paketen über Koppelpunkte zu Abnehmerleitungen vorgesehen ist,
- zur Zwischenspeicherung der Pakete Puffer enthält,
- Mittel zum Vergleich der im Nachrichtenkopf der Pakete enthaltenen Weglenkungs-Information und zur Zuordnung eines Paketes zu einer Abnehmerleitung enthält und
- jeder Abnehmerleitung zugeordnete Entscheiderschaltungen enthält, die jeweils zur Festlegung der Reihenfolge der Durchschaltung von auf mehreren Zubringerleitungen anliegenden Paketen auf jeweils eine Abnehmerleitung vorgesehen sind.

In Kommunikationsnetzen nimmt der Anteil des zu übertragenden Datenverkehrs ständig zu. Zur Bewältigung des Datenverkehrs wurden Vermittlungssysteme getrennt für den Daten- und Fernsprechverkehr aufgebaut. Da die Datenrate der zu übertragenden Datensignale eine Vielzahl von unterschiedlichen Werten annehmen kann ist es schwierig, Daten- und Fernsprechvermittlung in einem Netzknoten zu vereinen. Für die Vermittlung von Daten wird häufig entweder das Verfahren der Durchschalte- oder der Speichervermittlung angewandt.

Bei dem Verfahren der Durchschaltevermittlung ist der Vermittlungsvorgang in einem Knoten durch die Aufnahme eines Verbindungswunsches, auswerten der Zielinformation, Bereitstellung eines physikalischen Weges durch die Koppelanordnung und Auslösen der Verbindung durch entsprechende Anforderung gekennzeichnet. Das Verfahren der Speichervermittlung dagegen ist durch die Aufnahme eines Verbindungswunsches, Auswerten der Zielinformation, Bereitstellen eines virtuellen Weges, Auswerten des Nachrichtenkopfes der Pakete, Verteilen der Pakete und Auslösen der virtuellen Verbindung auf Anforderung gekennzeichnet.

Bei dem Verfahren der Durchschaltevermittlung ist also ein physikalischer Weg zwischen zwei Teilnehmern während der ganzen Verbindung nur diesen Teilnehmern vorbehalten, während bei dem Verfahren der Speichervermittlung dieser physikalische Weg durch mehrere Teilnehmer benutzt werden kann. Dies wird durch Speicherung der Nachrichten in den Knoten erreicht, bis eine Leitung frei ist. Bei dem Verfahren der Speichervermittlung können die Nachrichten entweder im Falle eines Netzes mit Meldevermittlung beliebig lang sein oder die Nachrichten werden im Falle eines Netzes mit Paketvermittlung in Pakete zerlegt, deren Länge begrenzt ist.

In einem Paketvermittlungssystem kann die Flußsteuerung der Pakete mittels Datagramm oder unter Verwendung des Verfahrens der virtuellen Verbindung erfolgen. Im ersten Fall enthält jedes Paket die Adresse des empfangenden Teilnehmers und die Pakete werden dem Paketvermittlungssystem unter Berücksichtigung der Netzbelastung übertragen. Im Falle der Steuerung mit virtueller Verbindung fließen die Pakete während des ganzen Datenaustausches zwischen zwei Teilnehmern auf dem gleichen Verbindungsweg.

Bei der Optimierung eines solches Paketvermittlungssystems sind die Randbedingungen hinsichtlich der Kapazität, der Flußkontrolle und Flußsteuerung besonders zu berücksichtigen. Das Verfahren zur Flußsteuerung in einem Paketvermittlungssystem soll eine schnelle Adaptierung des Netzes im Fall eines Ausfalls oder großer Änderung des Verkehrsangebots ermöglichen, wozu jede Paketvermittlungseinrichtung soviele Informationen wie möglich über den Netzzustand besitzen muß, um einen entsprechenden Umleitungsweg berechnen zu können. Bei einer verteilten Steuerung liegt die Entscheidung über die Paketführung bei jeder Paketvermittlungseinrichtung. Die Durchschaltung der Pakete in der Paketvermittlungseinrichtung kann dabei nach dem Prinzip der asynchronen Zeitvielfachtechnik, wie dieses beispielsweise aus dem Vortrag "Asynchronous Time-Division Techniques" von Coudreuse et al, gehalten beim ISS 84 France 07. - 11. Mai 1984 (Session 32 C paper 2, pages 1 bis 7) hervorgeht, durchgeführt werden.

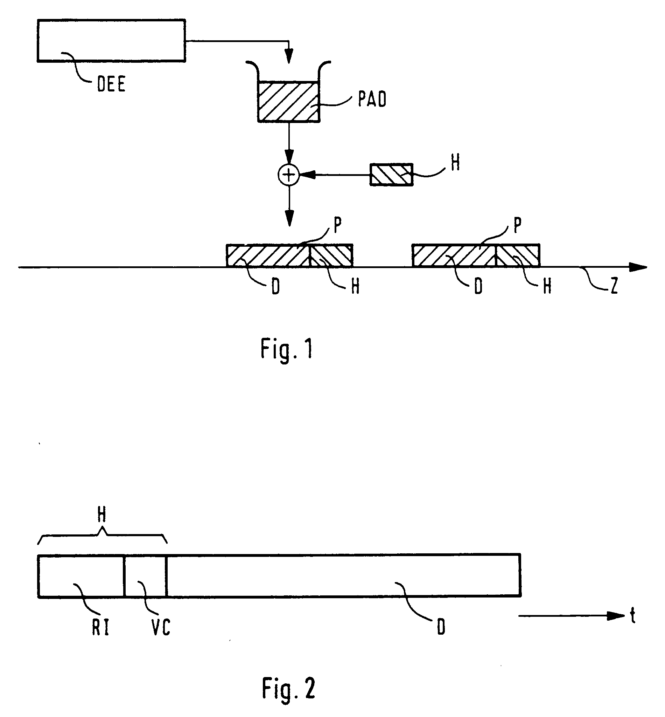

Die Durchschaltung der Pakete in der Paketvermittlungseinrichtung nach dem Prinzip der asynchronen Zeitvielfachtechnik wird im folgenden anhand der Figuren 1 und 2 näher beschrieben und erläutert.

Jede Datenquelle beim Teilnehmer ist mit einem sogenannten Paketisierer PAD ausgestattet, welcher der Teilnehmerleitung sogenannte Rahmen (frames) zuführt.

Ein Rahmen bzw. Paket P enthält einen Nachrichtenkopf H und die eigentlichen Daten D.

Der Nachrichtenkopf H selbst weist verschiedene Kennungen VC, um unterschiedliche virtuelle Kanäle auf der Teilnehmerleitung oder einer Leitung im Netz voneinander unterscheiden zu können, und eine Weglenkungs-Information RI auf. Mittels der Weglenkungs-Information RI erfolgt die Steuerung des Koppelfelds in der Paketvermittlungseinrichtung, wobei nachfolgend davon ausgegangen wird, daß ein Rahmen die Weglenkungs-Information RI für die zu durchlaufenden Koppelfelder enthält und wobei davon ausgegangen wird, daß alle Rahmen von gleicher Länge sind.

Es sind auch Netze denkbar,
a) in denen die Weglenkungs-Information RI für das nächste zu durchlaufende Koppelfeld gilt oder
b) in denen keine Weglenkungs-Information RI im Nachrichtenkopf H enthalten ist.

Im Fall a) werden die am Eingang des Koppelfelds gültigen Werte für die Kennung VC und die Weglenkungs-Information RI mit Verlassen des Koppelfelds durch neue Werte von VC und RI ersetzt. Die Information für diesen Übersetzungsschritt kann entweder aus den alten Werten algorithmisch ableitbar sein oder sie wird in der Signalisierungsphase von virtuellen Verbindungen erzeugt und in Tabellen abgelegt. Typischerweise wurden "Header-Übersetzer"-Schaltungen HÜ genannte Einrichtungen, die den Austausch der VC-, RI-Werte vornehmen, in den Abnehmerleitungen A des durchlaufenden Koppelfeldes angeordnet werden.

Im Fall b) wird am Eingang des Koppelfeldes der Nachrichtenkopf H um einen Wert für die Weglenkungs-Information RI erweitert. Der Wert für die Weglenkungsinformation RI kann entweder aus dem Wert für die Kennung VC algorithmisch ableitbar sein oder er wird in der Signalisierungsphase von virtuellen Verbindungen erzeugt und in Tabellen abgelegt. Auf den Abnehmerleitungen A des Koppelfeldes werden keine Werte für die Weglenkungs-Information RI weitergereicht.

Aus der DE-PS 26 20 220 ist eine Schaltungsanordnung zum Übertragen von Paketen über einen Zwischenspeicher in einer Zeitmultiplex-Datenübertragungsanlage bekannt, mittels der im selbststeuernden Koppelnetz unter Verwendung einer Warteschlangensteuerung die Durchschaltung der Pakete erfolgt. Mittels der daraus bekannten Koppelfeldsteuerung ist es nicht möglich ein Koppelnetz in Raumvielfachtechnik aufzubauen.

Weiterhin ist aus der DE-AS 26 14 086 eine Schaltungsanordnung zum Übertragen digitaler Nachrichten über mehrere Vermittlungsstellen bekannt, bei welcher die Weglenkungs-Information RI in jeder Paketvermittlungseinrichtung ausgewertet wird und bei der nach Durchschaltung des Pakets in der Paketvermittlungseinrichtung die Weglenkungs-Information RI entsprechend verkürzt wird.

Weiter ist aus dem Dokument "INTERNATIONAL SWITCHING SYMPOSIUM, Phoenix, Arizona, 15.-20.03.1987, Seiten 373-379, IEEE, New York, US; P. Gerke et al.: Fast packet switching - A principle for future Systeme generations?" das eingangs genannte Paketvermittlungsystem bekannt. Bei diesem System wird ein auf einer Zubringerleitung eintreffendes Paket in einem jeder Zubringerleitung zugeordnetem Mittel ausgewertet und einem einem Koppelpunkt zugeordneten Puffer zugeleitet. Ein solches Paket wird mittels einer Entscheiderschaltung über einen Koppelpunkt auf eine Abnehmerleitung gegeben.

Der Erfindung liegt die Aufgabe zugrunde, ein anderes Paketvermittlungssystem zu schaffen.

Diese Aufgabe wird durch ein Paketvermittlungssystem der eingangs genannten Art dadurch gelöst,
daß einer Zubringerleitung jeweils ein Eingangspuffer zur Zwischenspeicherung der zugeführten Pakete zugeordnet ist,
daß jedem Koppelpunkt jeweils ein Mittel zur Zwischenspeicherung der Weglenkungs-Information und jeweils ein Mittel zum Vergleich der zwischengespeicherten Weglenkungs-Information und der Adresse der Abnehmerleitung zugeordnet ist und
daß im Falle der Übereinstimmung von Weglenkungs-Information und Adresse der Abnehmerleitung jeweils wenigstens eine der Abnehmerleitung zugeordnete Entscheiderschaltung zur Steuerung der Zuführung des im Eingangspuffer gespeicherten Paketes zur Abnehmerleitung und der Aufnahme einer neuen Weglenkungs-Information zum Mittel der Zwischenspeicherung vorgesehen ist.

Bei dem erfindungsgemäßen Paketvermittlungssystem wird im Gegensatz zum Stand der Technik in einem jeder Zubringerleitung zugeordneten Eingangspuffer jedes eintreffende Paket zwischengespeichert. Durch diese Maßnahme ist die Zahl der Puffer bei dem erfindungsgemäßen Paketvermittlungssystem bei mehr als einer Abnehmerleitung geringer als bei dem oben genannten bekannten System. Jeweils ein jedem Koppelpunkt zugeordnetes Mittel vergleicht die Weglenkungs-Information mit der Adresse der Abnehmerleitung. Falls die Weglenkungs-Information und die Adresse übereinstimmen, steuert die zugeordnete Entscheiderschaltung die Zuführung zur Abnehmerleitung.

Infolge der Parallelverarbeitung der im Nachrichtenkopf enthaltene Informationen wird der Anschluß einer unbeschränkten Anzahl von Zubringer- und Abnehmerleitungen ermöglicht. Die Auswertung der im Nachrichtenkopf enthaltenen Weglenkungs-Information erfolgt dezentral. Durch eine modulare Ausgestaltung ist die Möglichkeit des Aufbaus beliebig großer Koppelfelder gegeben.

In einer Weiterbildung der Erfindung ist vorgesehen, daß ein als Mittel zum Vergleich dienender Komparator einerseits mit einem als Mittel zur Zwischenspeicherung einer Weglenkungs-Information dienenden ersten Schieberegister und andererseits mit einer zugeordneten Entscheiderschaltung gekoppelt ist und daß eine solche Entscheiderschaltung nach Feststellung der Übereinstimmung zwischen Weglenkungs-Information und Adresse der zugeordneten Abnehmerleitung zur Erzeugung eines Freigabesignals für eine zur Steuerung des dem Komparator zugeordneten Eingangspuffers dienende Logikschaltung dient. Dabei ist jede Entscheiderschaltung zur zyklischen Abfrage aller zugeordneten Komparatoren und bei Eintreffen von auf mehreren Zubringerleitungen anliegenden Paketen zur Bestimmung der Reihenfolge der Erzeugung eines Freigabesignals durch die räumliche Anordnung der Zubringerleitungen vorgesehen.

Ein Ausführungsbeispiel für jede Logikschaltung, die ein erstes und zweites UND-Glied, ein erstes und zweites ODER-Glied und ein bistasbiles Kippglied enthält, ist durch folgende Merkmale charakterisiert:
Ein erster Eingang des ersten UND-Glieds und des ersten ODER-Glieds ist mit der Entscheiderschaltung verbunden. Dem zweiten Eingang des ersten ODER-Glieds, dessen Ausgang mit einem Rücksetz-Eingang des bistabilen Kippglieds verbunden ist, wird ein in einer Paketvermittlungseinrichtung erzeugtes Startsignal zugeführt. Dem zweiten Eingang des ersten UND-Glieds, dessen Ausgang mit dem ersten Eingang des zweiten ODER-Glieds verbunden ist, wird ein in einer Paketvermittlungseinrichtung erzeugter Datentakt zugeführt. Der invertierende Ausgang des bistabilen Kippglieds ist mit einem ersten Eingang des zweiten UND-Glieds verbunden, an dessen zweiten Eingang ein in einer Paketvermittlungseinrichtung erzeugter Rahmentakt anliegt. Der Ausgang des zweiten UND-Glieds ist mit dem zweiten Eingang des zweiten ODER-Glieds verbunden, dessen Ausgang sowohl mit dem jeweiligen Eingangspuffer als auch mit dem jeweiligen ersten Schieberegister verbunden ist. Am Setzeingang des bistabilen Kippglieds liegt ein in einer Paketvermittlungseinrichtung aus dem Rahmentakt abgeleitetes Sperr-Signal an.

Wenn die Koppelpunkte zu Koppelvielfachen zusammengefaßt werden ist mit jedem ersten Schieberegister, das zur Zwischenspeicherung eines ersten Teils der Weglenkungs-Information dient, jeweils ein zweites Schieberegister, das zur Zwischenspeicherung eines zweiten Teils der Weglenkungs-Information dient, gekoppelt. Jedem zweiten Schieberegister ist jeweils ein Adressenspeicher zugeordnet, welcher einerseits mit einem dem jeweiligen ersten Schieberegister zugeordneten Komparator und andererseits mit einer Entscheiderschaltung gekoppelt ist. Die Komparatoren sind dabei jeweils zum Vergleich des ersten Teils der Weglenkungs-Information mit der Adresse des Koppelvielfachs vorgesehen. Bei einer Übereinstimmung des ersten Teils der Weglenkungs-Information mit der Adresse des Koppelvielfachs anhand des zeitlich nachfolgenden zweiten Teils der Weglenkungs-Information sind jeweils ein Adressenspeicher und jeweils eine Entscheiderschaltung zur Durchschaltung des Paketes der betreffenden Weglenkungs-Information zur ausgewählten Abnehmerleitung vorgesehen.

Die Erfindung wird im folgenden anhand verschiedener in der Zeichnung dargestellten Ausführungsformen näher beschrieben und erläutert. Es zeigt:
Fig. 1 die teilnehmerseitigen Einrichtungen in einem Vermittlungssystem,
Fig. 2 den Aufbau der Pakete,
Fig. 3 eine erste Ausführungsform der Koppelfeldsteuerung,
Fig. 4 eine zweite Ausführungsform der Koppelfeldsteuerung,
Fig. 5 eine Ausführungsform der in der Koppelfeldsteuerung angeordneten Entscheiderschaltung und
Fig. 6 eine dritte Ausführungsform der Koppelfeldsteuerung und
Fig. 7 eine vierte Ausführungsform der Koppelfeldsteuerung zur Durchführung des erfindungsgemäßen Verfahrens.

Fig. 1 zeigt vereinfacht die teilnehmerseitige Erzeugung der Pakete P zur Übertragung einer Nachricht von einer Datenendeinrichtung DEE. Mittels des Paketisierers PAD wird die Nachricht in Einheitspakete definierter Länge zerlegt und mit einem Nachrichtenkopf H versehen. Die so gebildeten Einheitspakete werden über eine Sammelschiene (Zubringerleitung Z) zur Vermittlungseinrichtung, insbesondere Paketvermittlungseinrichtung übertragen.

Fig. 2 zeigt den Aufbau der einzelnen Pakete P, bestehend aus Nachrichtenkopf H und Daten D. Im Nachrichtenkopf H ist die Weglenkungs-Information RI enthalten. Mittels der Kennungen VC können unterschiedliche virtuelle Kanäle unterschieden werden.

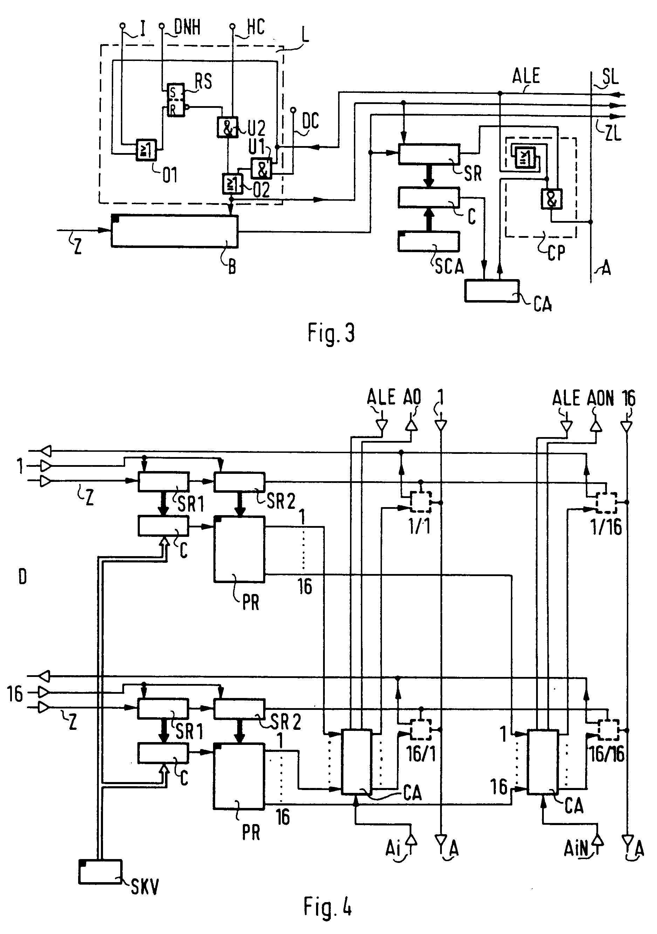

Aus dem Sammelschienensystem mit Zubringer- und Abnehmerleitungen Z, A wird ein Koppelfeld nach Art eines Raummultiplex-Koppelfelds aufgebaut. Bei der in Fig. 3 dargestellten ersten Ausführungsform ist für jeden Koppelpunkt CP eine eigene Auswertelogik für die im Nachrichtenkopf H enthaltenen Informationen vorgesehen. Die über die Zubringerleitung Z zugeführten Pakete P werden im Koppelfeld eingangsseitig im Eingangspuffer B aufgenommen. Die vom Teilnehmer oder der vorangegangenen Paketvermittlungseinrichtung empfangenen Rahmen stehen rechtsbündig im Eingangspuffer B. Mittels eines jedem Koppelpunkt CP zugeordneten Komparators C wird die Adresse (im Speicher SCA gespeichert) der spaltenweise angeordneten Abnehmerleitungen A mit der Weglenkungs-Information RI verglichen. Jeder der Abnehmerleitungen A ist eine Entscheiderschaltung CA zugeordnet, welche im Falle gleicher Weglenkungs-Informationen RI die Reihenfolge der durchzuschaltenden, zeilenweise angeordneten Zubringerleitungen Z festlegt. Die Reihenfolge wird bei einer Ausführungsform des erfindungsgemäßen Verfahrens durch die räumliche Anordnung der Zubringerleitungen Z bestimmt, wobei jede Entscheiderschaltung CA alle ihr zugeordneten Komparatoren C zyklisch abfragt.

Mit dem Eingangspuffer B ist eine der Anzahl von Abnehmerleitungen A entsprechende Anzahl von Schieberegistern SR verbunden, in welchen die Weglenkungs-Information RI gespeichert wird. Jedes Schieberegister SR ist einerseits mit dem Koppelpunkt CP andererseits mit dem Komparator C verbunden. Der Aktivierungseingang des zugehörigen Koppelpunktes ist über die Entscheiderschaltung CA mit dem Komparator C verbunden. Die Entscheiderschaltung CA steuert durch ein einer Logikschaltung zugeführtes Freigabesignal ALE die Aufnahme einer neuen Weglenkungs-Information RI im Schieberegister SR.

Die mit dem Eingangspuffer B verbundene Logikschaltung L weist ein erstes UND-Glied U1 und ein erstes ODER-Glied O1 auf. Jeweils der erste Eingang des ersten UND-Glieds U1 und des ersten ODER-Glieds O1 der Logikschaltung L ist mit der Entscheiderschaltung CA verbunden. Dem zweiten Eingang des ersten ODER-Glieds O1, dessen Ausgang mit einem Rücksetz-Eingang R eines bistabilen Kippglieds RS verbunden ist, wird ein in der Paketvermittlungseinrichtung erzeugtes Startsignal I zugeführt. Dem zweiten Eingang des ersten UND-Glieds U1, dessen Ausgang mit dem ersten Eingang eines zweiten ODER-Glieds O2 verbunden ist, wird ein in der Paketvermittlungseinrichtung erzeugter Datentakt DC zugeführt. Der invertierende Ausgang des bistabilen Kippglieds RS ist mit einem ersten Eingang eines zweiten UND-Glieds U2 verbunden, an dessen zweiten Eingang ein in der Paketvermittlungseinrichtung erzeugter Rahmentakt HC anliegt. Der Ausgang des zweiten UND-Glieds U2 ist mit dem zweiten Ausgang des zweiten ODER-Glieds verbunden, dessen Ausgang sowohl mit dem Eingangspuffer B als auch mit dem Schieberegister SR verbunden ist. Am Setzeingang S des bistabilen Kippglieds RS liegt ein in der Paketvermittlungseinrichtung aus dem Rahmentakt HC abgeleitetes Sperr-Signal DNH an.

Wenn das bistabile Kippglied RS am invertierenden Ausgang ein Schaltsignal abgibt und am zweiten Eingang des zweiten UND-Glied U2 der Rahmentakt HC anliegt, wird der Nachrichtenkopf H des ersten Rahmens im Eingangspuffer B in das Schieberegister SR eingelesen. Der Komparator C vergleicht die im Nachrichtenkopf H enthaltene Weglenkungs-Information RI mit der im Speicher SCA enthaltenen Adresse der spaltenweise angeordneten Abnehmerleitungen A.

Im Falle der Übereinstimmung wird vom Komparator C zur Entscheiderschaltung CA ein Signal gegeben und die Entscheiderschaltung CA legt anhand der empfangenen Signale die Reihenfolge der durchzuschaltenden, zeilenweise angeordneten Zubringerleitungen Z fest. Die Entscheiderschaltung CA legt hierzu an den Eingangspuffer B das Freigabesignal ALE an und schaltet den ausgewählten Koppelpunkt CP durch. Mit Hilfe des in der Paketvermittlungseinrichtung erzeugten Datentakts DC werden die Daten D über den Koppelpunkt CP auf die Abnehmerleitung A geschaltet. In Fig. 3 ist das nach Art eines Raummultiplex-Koppelfeldes aufgebaute Koppelfeld durch die Zeilenleitung ZL und die Spaltenleitung SL angedeutet.

Für den Fall, daß keine Weglenkungs-Information RI im Nachrichtenkopf H enthalten ist, wird die im Schieberegister SR gespeicherte Weglenkungs-Information RI nicht auf die Abnehmerleitung A gesendet.

Bei der in Fig. 4 dargestellten Zusammenfassung der Koppelpunkte CP zu Koppelvielfachen ist auch die Funktion der Auswertelogik zeilenweise zusammengefaßt. Beispielsweise ist eine 16x16 Matrix dargestellt, die Teil einer quadratischen 256x256 Konfiguration ist. Der Komparator C vergleicht einen ersten Teil der Weglenkungs-Information RI mit der im Speicher SKV enthaltenen Adresse des Koppelvielfachs. Bei Übereinstimmung wird, anhand des zeitlich nachfolgenden zweiten Teils der Weglenkungs-Information RI, die Abnehmerleitung A bestimmt und die dieser Abnehmerleitung A zugeordnete Entscheiderschaltung CA angesteuert.

Hierzu wird die Weglenkungs-Information RI der Serienschaltung zweier Schieberegister SR1, SR2 zugeführt. Das erste Schieberegister SR1 ist mit dem Komparator C und das zweite Schieberegister SR2 ist mit einem Adressenspeicher PR verbunden. Der Adressenspeicher PR ist einerseits mit dem Komparator C andererseits mit den Entscheiderschaltungen CA verbunden.

Die Weglenkungs-Information RI ist beispielsweise ein Wort mit neun Bit. Mit den ersten fünf Bit des Wortes wird festgestellt, ob in einer Zeile von Koppelvielfachen (bei der in Fig. 4 dargestellten Ausführungsform 16 Koppelvielfache) eines dieser Koppelvielfache angesteuert ist. Falls eine Übereinstimmung mit der Adresse des Koppelvielfachen feststellbar ist, wird die entsprechende Information der nächsten vier Bit des Worts ausgewertet. Anhand dieser Information wird die entsprechende Abnehmerleitung A angesteuert und das zugehörige Paket P zu dieser Abnehmerleitung A durchgeschaltet. Die Auswahl der Abnehmerleitungen A erfolgt dabei anhand der im Adressenspeicher PR aufgenommenen Information.

Für den Fall, daß Pakete P verschiedener Zubringerleitungen Z gleichzeitig derselben Abnehmerleitung A zugeführt werden sollen, ist eine Entscheidungslogik notwendig, welche aus einer Serienschaltung von Entscheiderschaltungen CA besteht, welche den Koppelvielfachen einer Ausgangsleitung A zugeordnet sind. Die Entscheiderschaltungen CA sind dabei derart miteinander verbunden und aufgebaut, daß alle Zubringerleitungen Z ihre Rahmen auf der gewünschten Abnehmerleitung A absetzen können, bevor eine Bearbeitung weiterer Nachrichtenköpfe H erfolgt.

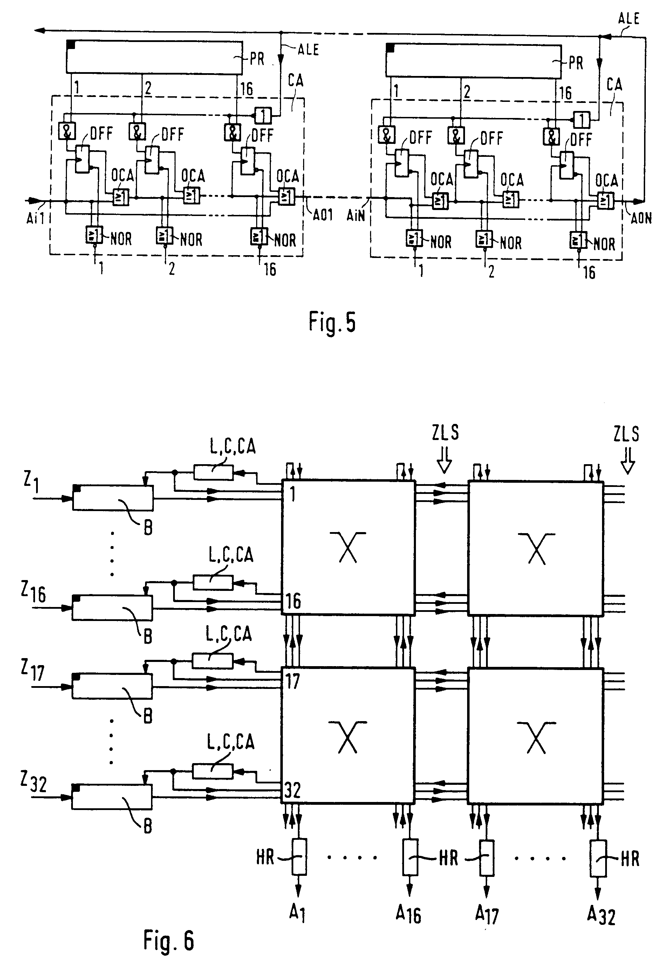

In Fig. 5 ist eine Ausführungsform einer Entscheiderschaltung CA im Detail dargestellt. Jede Entscheiderschaltung CA weist in Serie liegende flankengetriggerte D-Flip-Flops DFF auf. Der D-Eingang jedes D-Flip-Flops DFF steht mit dem Adressenspeichern PR in Verbindung. Der invertierende Ausgang jedes D-Flip-Flops DFF ist mit einem NOR-Glied NOR und der nicht invertierende Ausgang jedes D-Flip-Flops DFF ist mit einem ODER-Glied OCA verbunden.

Ein in der Paketvermittlungseinrichtung erzeugtes Serienschaltsignal Ai1 liegt an einem ersten Eingang der ersten Entscheiderschaltung CA an. Das am ersten Ausgang jeder Entscheiderschaltung CA auftretende Entscheiderausgangssignal AO1,..., AON-1 ist dem ersten Eingang der nachfolgenden Entscheiderschaltung CA als Serienschaltsignal Ai2,..., AiN zugeführt. Das am ersten Ausgang der letzten Entscheiderschaltung CA auftretende Entscheiderausgangssignal AON ist als Freigabesignal ALE jeweils einem zweiten Eingang jeder in der Serienschaltung vorherliegenden Entscheiderschaltung CA zugeführt.

Am Takteingang des ersten D-Flip-Flops DFF liegt das Serienschaltsignal Ai1 bzw. AO1,..., AON-1 und am Takteingang der nachfolgenden D-Flip-Flops DFF das Ausgangssignal der in Serie vorherliegenden ODER-Glieder OCA an. Das Ausgangssignal der ODER-Glieder OCA wird einem weiteren Eingang der in der Serie nachfolgenden ODER-Glieder OCA zugeführt und an einem dritten Eingang des letzten ODER-Glieds OCA liegt das Serienschaltsignal Ai1,..., AiN an. Im folgenden wird die Funktionsweise der vorstehend beschriebenen Entscheidungslogik näher erläutert.

Es wird davon ausgegangen, daß ein Zyklus gerade abgearbeitet ist und an den Eingängen der Entscheiderschaltungen CA liegt die neue Eingangsinformation aus dem Adressenspeicher PR an. Das Serienschaltsignal Ai1 weist den logischen Kennzustand "LOW" auf und alle D-Flip-Flops DFF haben den logischen Kennzustand "LOW" gespeichert. Damit liegt am ersten Ausgang jeder Entscheiderschaltung CA ein Entscheiderausgangssignal AO1,..., AON mit dem logischen Kennzustand "LOW" an.

Tritt nun eine positive Flanke im Serienschaltsignal Ai1 auf, so durchläuft dieses Signal mit einer Gatterverzögerung jeweils die Entscheiderschaltung CA und die Eingangsdaten werden in den D-Flip-Flop DFF übernommen. Solange noch ein D-Flip-Flop DFF ein Signal mit dem logischen Kennzustand "HIGH" gespeichert hat, weisen alle am ersten Ausgang jeder Entscheiderschaltung CA auftretenden Entscheiderausgangssignale AO1,..., AON den logischen Kennzustand "HIGH" auf.

Wenn das Serienschaltsignal Ai1 den logischen Kennzustand "LOW" annimmt, wird der erste Koppelpunkt CP der Kette, welcher ein D-Flip-Flop DFF mit dem logischen Kennzustand "HIGH" aufweist, schalten. DiesesD-Flip-Flop DFF sperrt gleichzeitig mit seinem nicht invertierenden Ausgang alle weiteren Koppelpunkte CP der Kette. Nach dem Auslesen der Daten über den aktivierten Koppelpunkt CP wird in der Paketvermittlungseinrichtung eine neue positive Flanke im Serienschaltsignal Ai1 erzeugt. Dadurch wird das eben noch aktive D-Flip-Flop DFF zurückgesetzt und der logische Kennzustand "LOW" übernommen. Wenn das Serienschaltsignal Ai1 wieder den logischen Kennzustand "LOW" annimmt, kann der nächste Koppelpunkt CP schalten, dessen zugehöriges D-Flip-Flop DFF den logischen Kennzustand "HIGH" gespeichert hat. Der so beschriebene Zyklus läuft solange ab, bis das letzte aktive D-Flip-Flop DFF der Kette zurückgesetzt worden ist.

Mit der nächsten positiven Flanke des Serienschaltsignals Ai1 können dann wieder Eingangsdaten in den D-Flip-Flops DFF übernommen werden. Diese Flanke kann in das feste Raster der positiven Flanken des Serienschaltsignals Ai1 fallen.

Durch einen Flankenwechsel im Freigabesignal ALE kann ohne Änderung des erfindungsgemäßen Verfahrens das letzte aktive D-Flip-Flop DFF zurückgesetzt werden, sodaß die Eingangsdaten schneller übernommen werden können.

Fig. 6 zeigt, wie unter Verwendung der in Fig. 4 dargestellten Ausführungsform größere quadratische Koppelfelder aufgebaut werden können. Auch bei dieser Ausführungsform wird nur ein Eingangspuffer B pro Zeile benötigt. In jeder Zeile schaltet zur gleichen Zeit jeweils nur ein Koppelpunkt CP. Falls die Daten noch in einem weiteren Koppelfeld durchgeschaltet werden müssen, wird innerhalb jenes Teils des Nachrichtenkopfs H, welcher die Weglenkungs-Information RI enthält, eine Rotation der Daten vorgenommen, sodaß nunmehr die für das nachfolgende Koppelfeld relevante Information an erster Stelle im Nachrichtenkopf H steht. Hierzu ist eine Nachrichtenkopf-Rotationsschaltung HR vorgesehen.

Um das quadratische Anwachsen der Anzahl der Koppelpunkte CP bei einer Vielzahl von Zubringer- und Abnehmerleitungen Z, A zu vermeiden, kann wie bei Raummultiplex-Koppelfeldern der Fernsprechtechnik ein sogenanntes Zwischenleitungssystem ZLS vorgesehen werden.

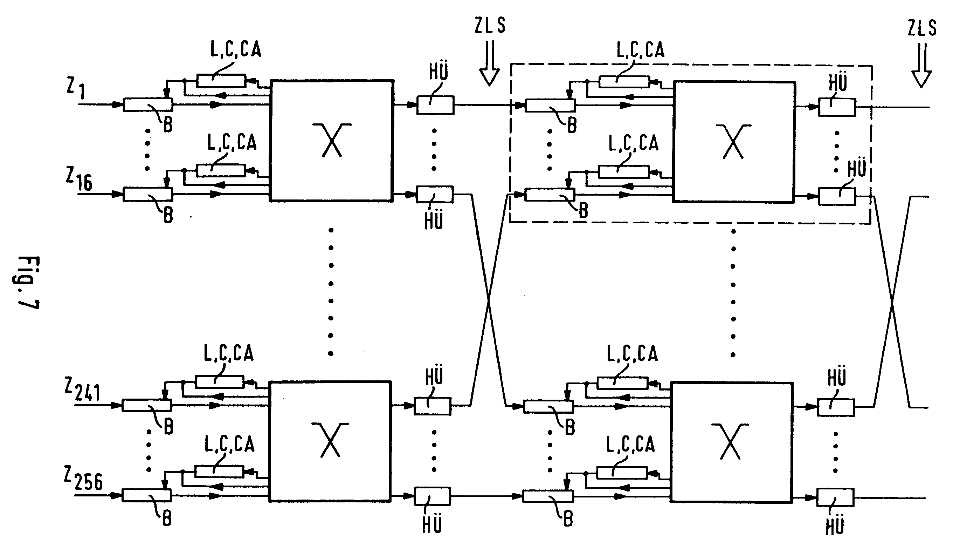

Da jedes Koppelvielfach unabhängig von den übrigen Koppelvielfachen die Durchschaltung vornimmt, kann auf die Identifizierung der einzelnen Matrix verzichtet werden (d.h. Entfallen des Teils des Worts mit fünf Bit). In einem m-stufigen Koppelfeld ist bei einer solchen Ausführungsform im Nachrichtenkopf eine Anzahl von m-Weglenkungs-Informationen RI enthalten, welche Stufe für Stufe abgearbeitet werden. Demzufolge ist für jedes Koppelvielfach in jeder Abnehmerleitung H eine Nachrichtenkopf-Rotationsschaltung HR vorzusehen. Weiterhin ist vor jeder Stufe des mehrstufigen Koppelfelds ein Satz von Eingangspuffern B erforderlich: vgl. Fig. 7 für m=3. Hier bietet sich an, die umrandeten Komponenten als Grundbaustein für den Aufbau größerer Koppelfelder zu verwenden. In Netzen in denen keine Weglenkungs-Information RI im Nachrichtenkopf H enthalten ist, ist bei einer auf einen Eintrag beschränkten Weglenkungs-Information RI statt einer Nachrichtenkopf-Rotationsschaltung HR eine Header-Übersetzer-Schaltung HÜ vorzusehen.

## Patentansprüche

1. Nach dem Prinzip der asynchronen Zeitvielfachtechnik arbeitendes und Paketisierer (PAD) und Paketvermittlungseinrichtungen enthaltenes Paketvermittlungssystem, welches
- zur Durchschaltung von auf Zubringerleitungen (Z) zugeführten Paketen (P) über Koppelpunkte (CP) zu Abnehmerleitungen (A) vorgesehen ist,
- zur Zwischenspeicherung der Pakete (P) Puffer (B) enthält,
- Mittel zum Vergleich der im Nachrichtenkopf (H) der Pakete (P) enthaltenen Weglenkungs-Information (RI) und zur Zuordnung eines Paketes (P) zu einer Abnehmerleitung (A) enthält und
- jeder Abnehmerleitung (A) zugeordnete Entscheiderschaltungen (CA) enthält, die jeweils zur Festlegung der Reihenfolge der Durchschaltung von auf mehreren Zubringerleitungen (Z) anliegenden Paketen (P) auf jeweils eine Abnehmerleitung (A) vorgesehen sind,
dadurch gekennzeichnet,
daß einer Zubringerleitung (Z) jeweils ein Eingangspuffer (B) zur Zwischenspeicherung der zugeführten Pakete (P) zugeordnet ist,
daß jedem Koppelpunkt (CP) jeweils ein Mittel (SR, SR1, SR2) zur Zwischenspeicherung der Weglenkungs-Information (RI) und jeweils ein Mittel (C) zum Vergleich der zwischengespeicherten Weglenkungs-Information (RI) und der Adresse der Abnehmerleitung (A) zugeordnet ist und
daß im Falle der Übereinstimmung von Weglenkungs-Information (RI) und Adresse der Abnehmerleitung (A) jeweils wenigstens eine der Abnehmerleitung zugeordnete Entscheiderschaltung (CA) zur Steuerung sowohl der Zuführung des im Eingangspuffer gespeicherten Paketes (P) zur Abnehmerleitung (A) hin, als auch der Aufnahme einer neuen Weglenkungs-Information (RI) vom Mittel (SR, SR1, SR2) zur Zwischenspeicherung vorgesehen ist.

2. Paketvermittlungssystem nach Anspruch 1,
dadurch gekennzeichnet,
daß ein als Mittel zum Vergleich dienender Komparator (C) einerseits mit einem als Mittel zur Zwischenspeicherung einer Weglenkungs-Information (RI) dienenden ersten Schieberegister (SR, SR1) und andererseits mit einer zugeordneten Entscheiderschaltung (CA) gekoppelt ist und
daß eine solche Entscheiderschaltung (CA) nach Feststellung der Übereinstimmung zwischen Weglenkungs-Information und Adresse der zugeordneten Abnehmerleitung (A) zur Erzeugung eines Freigäbesignals (ALE) für eine zur Steuerung des dem Komparator (C) zugeordneten Eingangspuffers (B) dienende Logikschaltung (L) vorgesehen ist.

3. Paketvermittlungssystem nach Anspruch 2,
dadurch gekennzeichnet,
daß jede Entscheiderschaltung (CA)
- zur zyklischen Abfrage aller zugeordneten Komparatoren (C) vorgesehen ist und
- bei Eintreffen von auf mehreren Zubringerleitungen (Z) anliegenden Paketen (P) zur Bestimmung der Reihenfolge der Erzeugung eines Freigabesignals (ALE) durch die räumliche Anordnung der Zubringerleitungen (Z) vorgesehen ist.

4. Paketvermittlungssystem nach Anspruch 2 oder 3,
dadurch gekennzeichnet,
daß jeweils ein erster Eingang eines ersten UND-Glieds (U1) und eines ersten ODER-Glieds (O1) jeder Logikschaltung (L) mit der Entscheiderschaltung (CA) verbunden ist,
daß dem zweiten Eingang des ersten ODER-Glieds (O1), dessen Ausgang mit einem Rücksetz-Eingang (R) eines bistabilen Kippglieds (RS) jeder Logikschaltung (L) verbunden ist, ein in einer Paketvermittlungseinrichtung erzeugtes Startsignal (I) zugeführt wird,
daß dem zweiten Eingang des ersten UND-Glieds (U1), dessen Ausgang mit dem ersten Eingang eines zweiten ODER-Glieds (O2) verbunden ist, ein in einer Paketvermittlungseinrichtung erzeugter Datentakt (DC) zugeführt wird,
daß der invertierende Ausgang des bistabilen Kippglieds (RS) mit einem ersten Eingang eines zweiten UND-Glieds (U2) jeder Logikschaltung (L) verbunden ist, an dessen zweiten Eingang ein in einer Paketvermittlungseinrichtung erzeugter Rahmentakt (HC) anliegt,
daß der Ausgang des zweiten UND-Glieds (U2) mit dem zweiten Eingang des zweiten ODER-Glieds (O2) verbunden ist, dessen Ausgang sowohl mit dem jeweiligen Eingangspuffer (B) als auch mit dem jeweiligen ersten Schieberegister (SR) verbunden ist und
daß am Setzeingang (S) des bistabilen Kippglieds (RS) ein in einer Paketvermittlungseinrichtung aus dem Rahmentakt (HC) abgeleitetes Sperr-Signal (DNH) anliegt.

5. Paketvermittlungssystem nach Anspruch 2, 3 oder 4,
dadurch gekennzeichnet,
daß bei Zusammenfassung der Koppelpunkte (CP) zu Koppelvielfachen mit jedem ersten Schieberegister (SR1), das zur Zwischenspeicherung eines ersten Teils der Weglenkungs-Information (RI) dient, jeweils ein zweites Schieberegister (SR2), das zur Zwischenspeicherung eines zweiten Teils der Weglenkungs-Information (RI) dient, gekoppelt ist,
daß jedem zweiten Schieberegister (SR2) jeweils ein Adressenspeicher (PR) zugeordnet ist, welcher einerseits mit einem dem jeweiligen ersten Schieberegister (SR1) zugeordneten Komparator (C) und andererseits mit einer Entscheiderschaltung (CA) gekoppelt ist,
daß die Komparatoren (C) jeweils zum Vergleich des ersten Teils der Weglenkungs-Information (RI) mit der Adresse des Koppelvielfachs vorgesehen sind und
daß bei einer Übereinstimmung des ersten Teils der Weglenkungs-Information (RI) mit der Adresse des Koppelvielfachs anhand des zeitlich nachfolgenden zweiten Teils der Weglenkungs-Information (RI) jeweils ein Adressenspeicher (PR) und jeweils eine Entscheiderschaltung (CA) zur Durchschaltung des Paketes (P) der betreffenden Weglenkungs-Information (RI) zur ausgewählten Abnehmerleitung vorgesehen sind.

6. Paketvermittlungssystem nach Anspruch 5,
dadurch gekennzeichnet,
daß die Koppelvielfache zu einem mehrstufigen Koppelfeld zusammengeschaltet sind und daß die Durchschaltung der Koppelvielfache der einzelnen Koppelstufen unter Benutzung einer Nachrichtenkopf-Rotationsschaltung (HR) oder einer Header-Übersetzer-Schaltung (HÜ) erfolgt.

7. Paketvermittlungssystem nach Anspruch 6,
dadurch gekennzeichnet,
daß die Entscheiderschaltungen (CA) in Serienschaltung derart miteinander verbunden sind, daß an einem ersten Eingang der ersten Entscheiderschaltung (CA) ein in der Paketvermittlungseinrichtung erzeugtes Serienschaltsignal (Ai) anliegt, daß ein am ersten Ausgang jeder Entscheiderschaltung (CA) anliegendes Entscheiderausgangssignal (AON) dem ersten Eingang der nachfolgenden Entscheiderschaltung (CA) als Serienschaltsignal (AIN) zugeführt ist und daß das am ersten Ausgang der letzten Entscheiderschaltung (CA) auftretende Entscheiderausgangssignal (AON) an einem zweiten Eingang jeder in der Serienschaltung vorherliegenden Entscheiderschaltung (CA) anliegt.

8. Paketvermittlungssystem nach einem der Ansprüche 5 bis 7, dadurch gekennzeichnet,
daß jede Entscheiderschaltung (CA) in Serie liegende flankengetriggerte D-Flip-Flops (DFF) aufweist, daß der D-Eingang jedes D-Flip-Flops (DFF) mit dem Adressenspeicher (PR) in Verbindung steht und daß der invertierende Ausgang jedes D-Flip-Flops (DFF) mit einem NOR-Glied (NOR) und der nichtinvertierende Ausgang jedes D-Flip-Flops (DFF) mit einem ODER-Glied (OCA) verbunden ist.

9. Paketvermittlungssystem nach Anspruch 8,
dadurch gekennzeichnet,
daß am Takteingang des ersten D-Flip-Flops (DFF) das Serienschaltsignal (Ai, AON) und am Takteingang der nachfolgenden D-Flip-Flops (DFF) das Ausgangssignal der in Serie liegenden ODER-Glieder (OCA) anliegt, welches zudem einem weiteren Eingang der ODER-Glieder (OCA) zugeführt wird und daß an einem weiteren Eingang des letzten ODER-Glieds (OCA) das Serienschaltsignal (Ai, AON) anliegt.

## Claims

1. Packet switching system operating according to the principle of the synchronous time-division multiplex technique and comprising packetizers (PAD) and packet switch arrangements, which packet switching system
- switches through *via* junction points (CP) to trunk lines (A) packets (P) supplied over feeder lines (Z),
- comprises buffers (B) for buffering the packets (P),
- comprises means for comparing the routing information (RI) contained in the message header (H) of the packets (P) and for allocating a packet (P) to a trunk line (A), and
- comprises decision circuits (CA) allocated to each trunk line (A) which are provided for determining the order in which packets (P) present on a plurality of feeder lines (Z) are switched through to individual trunk lines (A), characterized in that one input buffer (B) each for buffering the supplied packets (P) is allocated to a feeder line (Z), in that a buffer means (SR, SR1, SR2) each for buffering the routing information (RI) is allocated to each junction point (CP) and a comparing means (C) each for comparing the buffered routing information (RI) with the address of the trunk line (A) is allocated to each junction point, and in that if routing information (RI) and address of the trunk line (A) match, at least one decision circuit (CA) allocated to the trunk line is provided for controlling the feeding of packets (P) stored in the input buffer to the trunk line (A) and for controlling the entry of new routing information (RI) in the buffer means (SR, SR1, SR2).

2. Packet switching system as claimed in Claim 1, characterized in that a comparator (C) used as a comparing means is coupled, on the one hand, to a first shift register (SR, SR1) used as a means for buffering the routing information (RI) and, on the other hand, to an allocated decision circuit (CA) and in that such a decision circuit (CA), once a match has been ascertained between routing information and address of the allocated trunk line (A), generates a release signal (ALE) for a logic circuit (L) used for controlling the input buffer (B) allocated to the comparator (C).

3. Packet switching system as claimed in Claim 2, characterized in that each decision circuit (CA)
- cyclically scans all its associated comparators (C) and
- if it detects packets (P) available on a plurality of feeder lines (Z), determines the order in which a release signal (ALE) is generated through the special arrangement of feeder lines (Z).

4. Packet switching system as claimed in Claim 2 or 3, characterized in that a first input of a first AND gate (U1) and of a first OR gate (O1) of each logic circuit (L) is connected to the decision circuit (CA), in that the second input of the first OR gate (O1), whose output is connected to the reset input (R) of a bistable flip-flop (RS) of each logic circuit (L), is supplied with a start signal (I) generated in a packet switch arrangement, in that the second input of the first AND gate (U1), whose output is connected to the first input of a second OR gate (O2), is supplied with a data clock (DC) generated in a packet switch arrangement, in that the inverting output of the bistable flip-flop (RS) is connected to a first input of a second AND gate (U2) of each logic circuit (L), at whose second input is available a frame clock (HC) generated in a packet switch arrangement, in that the output of the second AND gate (U2) is connected to the second input of the second OR gate (O2), whose output is connected both to the respective input buffer (B) and to the respective first shift register (SR), and in that an inhibit signal (DNH) recovered from the frame clock (HC) in a packet switch arrangement is available at the set input (S) of the bistable flip-flop (RS).

5. Packet switching system as claimed in Claim 2, 3 or 4, characterized in that if the junction points (CP) are combined to a switching matrix, a second shift register (SR2) used for buffering a second part of the routing information (RI) is coupled to each first shift register (SR1) used for buffering a first part of the routing information (RI), in that an address store (PR) is allocated to each second shift register (SR2), which store is coupled, on the one hand, to a comparator (C) allocated to its first shift register (SR1) and, on the other hand, to a decision circuit (CA), in that the comparators (C) then compare the first part of the routing information (RI) with the address of the switching matrix and in that if the first part of the routing information (RI) matches the address of the switching matrix on the basis of the subsequent second part of the routing information (RI), an address store (PR) and a decision circuit (CA) provide that the packet (P) of the routing information (RI) is switched through to the selected trunk line.

6. Packet switching system as claimed in Claim 5, characterized in that the switching matrices are combined to a multi-stage switching network and in that the through-connection of the switching matrices of the individual switching stages is effected by utilizing a message header rotation circuit (HR) or a header translation circuit (Hü).

7. Packet switching system as claimed in Claim 6, characterized in that the decision circuits (CA) are connected in series to each other, so that a series switch signal (Ai) generated in packet switch arrangement is available at a first input of the first decision circuit (CA), in that an output signal (A0N) occurring at the first output of each decision circuit (CA) is applied to the first input of the subsequent decision circuit (CA) as a series switch signal (AIN), and in that the output signal (AON) occurring at the first output of the last decision circuit (CA) is available at a second input of each decision circuit (CA) preceding in the series arrangement.

8. Packet switching system as claimed in one of the Claims 5 to 7, characterized in that each decision circuit (CA) has edge-triggered D-flip-flops (DFF) arranged in series, in that the D input of each D-flip-flop (DFF) is connected to the address store (PR) and in that the inverting output of each D-flip-flop (DFF) is connected to a NOR gate (NOR) and the non-inverting output of each D-Flip-flop (DFF) is connected to an OR gate (OCA).

9. Packet switching system as claimed Claim 8, characterized in that the series switch signal (Ai, AON) is applied to the clock input of the first D-flip-flop (DFF) and the output signal of the OR gate (OCA) in the series arrangement is applied to the clock inputs of the subsequent D-flip-flop (DFF), which output signal is also applied to a further input of the OR gates (OCA) and in that the series switch signal (Ai,AON) is applied to a further input of the last OR gate (OCA).

## Revendications

1. Système de commutation de paquets opérant selon le principe de la technique de multiplexage asynchrone dans le temps (PAD) et contenant des dispositifs assembleurs/désassembleurs de paquets et des dispositifs de commutation de paquets, ce système :
- étant prévu pour transmettre par interconnexion des paquets (P) acheminés par des lignes de desserte (Z) à des lignes d'abonnés (A) via des points de commutation (CP);
- contenant des tampons (B) pour assurer le tamponnement des paquets (P);
- contenant des moyens pour comparer les informations directionnelles (RI) contenues dans l'en-tête (H) des paquets (P) et pour affecter un paquet (P) à une ligne d'abonné (A), et
- contenant des circuits de décision (CA) affectés à chaque ligne d'abonné (A) et qui sont prévus respectivement pour établir l'ordre de succession de la transmission par interconnexion de paquets (P) présents sur plusieurs lignes de desserte (Z) chaque fois à une ligne d'abonné (A), caractérisé en ce que à chaque ligne de desserte (Z) est affecté un tampon d'entrée (B) pour tamponner les paquets (P) acheminés, qu'à chaque point de commutation (CP) sont respectivement affectés un moyen de tamponnement (SR, SR1, SR2) de l'information directionnelle (RI) et respectivement a moyen de comparaison (C) de l'information directionnelle (RI) tampononée et de l'adresse de la ligne d'abonné (A), et que dans le cas d'une coïncidence entre l'information directionnelle (RI) et l'adresse de la ligne d'abonné (A), il est prévu respectivement au moins un circuit de décision (CA) affecté à la ligne d'abonné (A) pour commander non seulement l'acheminement du paquet (P) mémorisé dans le tampon d'entrée à la ligne d'abonné (A), mais également l'enregistrement d'une nouvelle information directionnelle (RI) du moyen (SR, SR1, SR2) dans le moyen de tamponnement.

2. Système de commutation de paquets selon la revendication 1, caractérisé en ce qu'un comparateur (C) servant de moyen de comparaison est couplé, d'une part, à un premier registre à décalage (SR, SR1) servant de moyen de tamponnement d'une information directionnelle (RI) et, d'autre part, à un circuit de décision (CA) associé, et qu'un tel circuit de décision (CA) sert, après constation de la coïncidence entre l'information directionnelle (RI) et l'adresse de la ligne d'abonné (A) associée, à la production d'un signal de libération (ALE) pour un circuit logique (L) servant à commander le tampon d'entrée (B) affecté au comparateur (C).

3. Système de commutation de paquets selon la revendication 2, caractérisé en ce que chaque circuit de décision (CA) est prévu :
- pour l'interrogation cyclique de tous les comparateurs (C) affectés et,
- lors de l'arrivée de paquets (P) présents sur plusieurs lignes de desserte (Z), à la détermination de l'ordre de succession de la production d'un signal de libération (ALE) par l'agencement spatial des lignes de desserte (Z).

4. Système de commutation de paquets selon la revendication 2 ou 3, caractérisé en ce qu'une première entrée d'un premier circuit ET (U1) et d'un premier circuit OU (O1) de chaque circuit logique (L) est connectée au circuit de décision (CA), qu'à la deuxième entrée du premier circuit OU (01), dont la sortie est connectée à une entrée de remise à zéro (R) d'un circuit bistable (RS) de chaque circuit logique (L), est acheminé un signal de démarrage (I) produit dans un dispositif de commutation de paquets, qu'à la deuxième entrée du premier circuit ET (U1), dont la sortie est connectée à la première entrée d'un deuxième circuit OU (O2), est acheminé un rythme de données (DC) produit dans un dispositif de commutation de paquets, que la sortie inverseuse du circuit bistable (RS) est connectée à une première entrée d'un deuxième circuit ET (U2) de chaque circuit logique (L) à la deuxième entrée duquel est appliqué un rythme de trames (HC) produit dans un dispositif de commutation de paquets, que la sortie du deuxième circuit ET (U2) est connectée à la deuxième entrée du deuxième circuit OU (O2), dont la sortie est connectée non seulement au tampon d'entrée (B) respectif, mais également au premier registre à décalage (SR) respectif, et qu'à l'entrée de mise à un (S) du circuit bistable (RS) est appliqué un signal de blocage (DNH) tiré du rythme de trames (HC) dans un dispositif de commutation de paquets.

5. Système de commutation de paquets selon la revendication 2, 3 ou 4, caractérisé en ce que, lorsque les points de commutation (CP) sont rassemblés en multiples de commutation, à chaque premier registre à décage (SR1), qui sert au tamponnement d'une première partie de l'information directionnelle (RI), est couplé respectivement un deuxième registre à décalage (SR2), qui sert au tamponnement d'une deuxième partie de l'information directionnelle (RI), qu'à chaque deuxième registre à décalage (SR2) est respectivement affectée une mémoire d'adressage (PR), qui est couplée, d'une part, à un comparateur (C) affecté respectivement au premier registre à décalage (SR1) et, d'autre part, à un circuit de décision (CA), que les comparateurs (C) sont respectivement prévus pour comparer la première partie de l'information directionnelle (RI) à l'adresse du multiple de couplage et que, dans le cas d'une coïncidence de la première partie de l'information directionnelle (RI) avec l'adresse du multiple de commutation à l'appui de la deuxième partie de l'information directionnelle (RI) suivant dans le temps, sont prévus respectivement une mémoire d'adressage (PR) et respectivement un circuit de décision (CA) pour transmettre par interconnexion le paquet (P) de l'information directionnelle (RI) en question à la ligne d'abonné choisie.

6. Système de commutation de paquets selon la revendication 5, caractérisé en ce que les multiples de commutation sont interconnectés en un réseau de commutation à plusieurs étapes et l'interconnexion des multiples de commutation des étapes de commutation individuelles s'effectue par l'emploi d'un dispositif de rotation de l'en-tête de message (HR) ou d'un circuit de conversion d'en-tête (HU).

7. Système de commutation de paquets selon la revendication 6, caractérisé en ce que les circuits de décision (CA) sont connectés les uns aux autres en un montage en série, qu'à une entrée du premier circuit de décision (CA) est présent un signal de commutation en série (Ai) produit dans le dispositif de commutation de paquets, qu'un signal de sortie (AON) présent à une sortie de chaque circuit de décision (CA) est acheminé à la première entrée du circuit de décision suivant (CA) sous la forme d'un signal de commutation en série (AIN) et que le signal de sortie (AON) apparaissant à la première sortie du dernier circuit de décision (CA) s'applique à une deuxième entrée de chaque circuit de décision (CA) précédent dans le montage en série.

8. Système de commutation de paquets selon l'une quelconque des revendications 5 à 7, caractérisé en ce que chaque circuit de décision (CA) comporte des bascules D (DFF) à déclenchement par flancs en série, que l'entrée D de chaque bascule D (DFF) est connectée à la mémoire d'adressage (PR) et que la sortie inverseuse de chaque bascule D (DFF) est connectée à un circuit NON OU (NOR) et la sortie non inverseuse de chaque bascule D (DFF) est connectée à un circuit OU (OCA).

9. Système de commutation de paquets selon la revendication 8, caractérisé en ce qu'à l'entrée de rythme de la première bascule D (DFF), le signal de commutation en série (Ai, AON) et, qu'à l'entrée de rythme de la bascule D (DFF) suivante, le signal de sortie des circuits OU (OCA) en série sont présents, ce signal étant acheminé, en outre, à une autre entrée des circuits OU (OCA) et, qu'à une autre entrée du dernier circuit OU (OCA), est présent le signal de commutation en série (Ai, AON).
